# EUROPÄISCHE PATENTANMELDUNG

(11) **EP 1 024 048 A2**
(43) Veröffentlichungstag der Anmeldung: **02.08.2000**
(21) Anmeldenummer: 99124833.7
(22) Anmeldetag: 14.12.1999
(51) Int. Cl.: B60N 2/42

(54) **Einem Fahrzeugsitz zugeordnete Sicherheitseinrichtung**

(30) Priorität: 28.01.1999 DE 19904322
(71) Anmelder: Volkswagen Aktiengesellschaft, 38436 Wolfsburg (DE)
(72) Erfinder: Schwant, Wilfried, Dipl.-Ing., 38536 Meinersen (DE)

(57) **Zusammenfassung**

Um bei einem Seitencrash eines Kraftfahrzeugs einen der betroffenen Seite benachbarten Sitz (3) möglichst schnell auf die Eindringgeschwindigkeit des ihm benachbarten Wandbereichs (1) zu bringen, ist eine beim Crash aktivierte Sicherheitseinrichtung (6) mit einer Kraftstütze (7) vorgesehen, die dann einen Freiraum zwischen Wandbereich (1) und Sitz (3) überbrückt.

## Beschreibung

Die Erfindung betrifft eine Sicherheitseinrichtung gemäß dem Oberbegriff des Patentanspruchs 1.

Aus verschiedenen Gründen, insbesondere aus Komfortgründen, d.h. zur Schaffung eines Bewegungsspielraums für einen auf dem Sitz befindlichen Fahrzeuginsassen, sieht man zwischen dem Fahrzeugsitz einerseits und einem ihm benachbarten Wandbereich des Fahrzeugs (worunter auch eine Säule oder eine Tür verstanden sein soll) einen Abstand oder Freiraum vor. Ein derartiger Freiraum wirkt sich, wie bemerkt, zwar günstig hinsichtlich des Sitzkomforts (Zugänglichkeit von Bedienelementen für Sitzverstellungen) aus, hat jedoch bei einem Seitencrash auf der betreffenden Seite des Fahrzeugs den Nachteil, daß der Sitz und damit der auf ihm sitzende Fahrzeuginsasse erst dann im Sinne des Entfernens von dem betroffenen Wandbereich beschleunigt wird, wenn der Wandbereich relativ weit in den Fahrzeuginnenraum eingetreten ist. Mit anderen Worten: Der beschriebene Freiraum wird nicht zum Schutz des Fahrzeugsinsassen vor gefährlichen Berührungen mit dem verformten seitlichen Wandbereich benutzt.

In der EP 0 691 910 B1 werden - teilweise unter Rückgriff auf weiteren Stand der Technik - Sicherheitseinrichtungen für Fahrzeuge beschrieben, die unter entsprechender Abänderung auch für einen Seitenaufprall eingesetzt werden sollen. Sie enthalten nur bei einem Crash aktivierte Mittel zur Verschiebung des Sitzes entgegen der Crashrichtung, also bei einem Seitencrash in Richtung Längsmittelebene des Fahrzeugs. Hier kommt es also zur einer Vergrößerung des oben definierten Freiraums bei einem Seitencrash durch Verfahren des betreffenden Sitzes in Querrichtung. Dies ist jedoch bei einem Seitencrash nur dann möglich, wenn zwischen benachbarten Sitzen ein Freiraum gewahrt und die Sitze quer verfahrbar gelagert sind.

Der Erfindung liegt die Aufgabe zugrunde, eine gattungsgemäße Sicherheitseinrichtung zu schaffen, die ohne Beeinträchtigung des Freiraums im normalen Fahrbetrieb gefährlichen Berührungen eines verformten Wandbereichs mit einem auf dem benachbarten Sitz befindlichen Fahrzeuginsassen entgegenwirkt.

Die erfindungsgemäße Lösung dieser Aufgabe besteht in den kennzeichneten Merkmalen des Hauptanspruchs, vorteilhafte Ausbildungen der Erfindung beschreiben die Unteransprüche.

Die Erfindung verzichtet also auf eine Vergrößerung des Abstandes zwischen dem Sitz und dem benachbarten Seitenwandbereich bei einem Seitencrash, bewirkt aber eine zumindest weitgehende Unterbindung der Verringerung des Abstandes zwischen dem vom Seitencrash betroffenen Wandbereich einerseits und der Seitenfläche des Sitzes andererseits. Da die Kraftstütze nur im aktivierten Zustand den Freiraum zwischen Wandbereich und Seite des Sitzes überbrückt, steht dieser Freiraum im normalen Fahrbetrieb voll zur Verfügung, beispielsweise für Komforterfordernisse.

Besonders vorteilhaft ist der Einsatz der Erfindung dann, wenn auf der anderen Sitzseite eine beispielsweise eine Kolben-Zylinder-Anordnung enthaltende weitere Sicherheitseinrichtung zur Abstützung gegen einen Mitteltunnel oder einen benachbarten Sitz vorhanden ist.

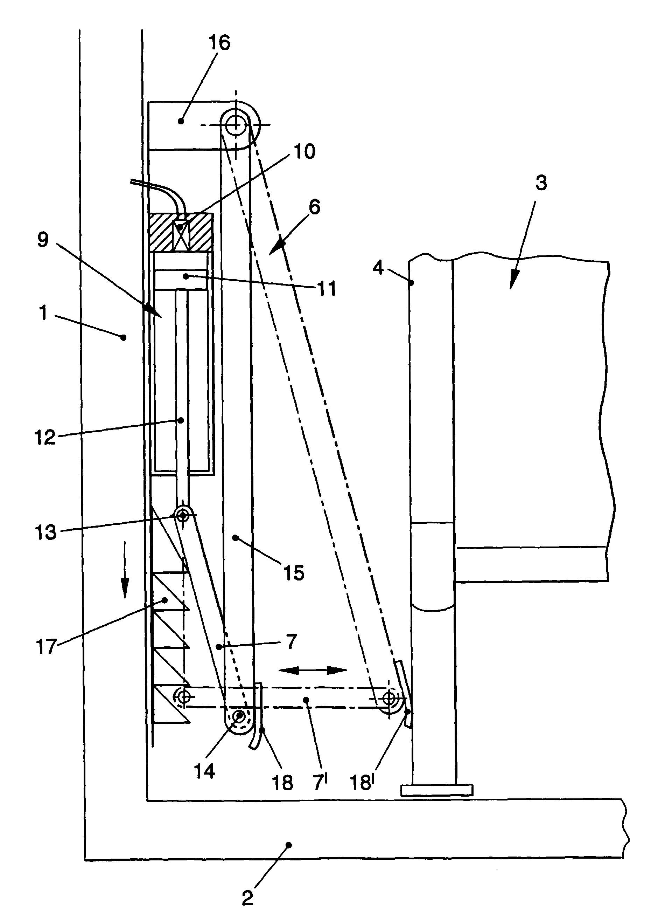

Ein Ausführungsbeispiel der Erfindung wird im folgenden anhand der Zeichnung erläutert, die einen Querschnitt durch ein Kraftfahrzeug im Bereich eines der Vordersitze wiedergibt.

Von dem eigentlichen Fahrzeug erkennt man lediglich den Wandbereich 1, beispielsweise eine B-Säule, und den Boden 2. Dem Wandbereich benachbart ist der bei 3 angedeutete Sitz bekannter und daher im einzelnen nicht zu beschreibender Bauart. Dieser Sitz kann in Längsrichtung des Fahrzeugs (also senkrecht zur Zeichenebene) in üblicher Weise auf Schiene gewollt verfahrbar gelagert sein, damit der auf dem Sitz befindliche Fahrzeuginsasse die Längsposition des Sitzes und damit den Abstand vom Armaturenbrett einstellen kann.

Zwischen der Seite 4 des Sitzes 3 einerseits und dem Seitenwandbereich 1 andererseits ist ein deutlich erkennbarer Freiraum vorgesehen, der erfindungsgemäß nicht nur dem Komfort des Insassen auf dem Sitz 3 im normalen Fahrbetrieb dient, sondern der auch zum Schutz des Fahrzeuginsassen bei Verformungen des Seitenwandbereichs 1 im Falle eines Seitencrashs herangezogen wird. Damit es bei einem Seitencrash und damit verbundenem Eindringen des Seitenwandbereichs 1 in den Fahrzeuginnenraum nicht zu gefährlichen Berührungen des verformten Wandbereichs 1 mit dem Fahrzeuginsassen kommt, ist erfindungsgemäß die allgemein mit 6 bezeichnete Sicherheitseinrichtung vorgesehen, die so konzipiert ist, daß sie einerseits im normalen Fahrbetrieb den Freiraum zwischen Seitenwandbereich 1 einerseits und Sitz 3 andererseits praktisch nicht verringert, andererseits aber bei einem Seitencrash und in den Fahrzeuginnenraum eindringendem Wandbereich 1 den besagten Freiraum oder Abstand im wesentlichen wahrt. Zu diesem Zweck enthält die Sicherheitseinrichtung 6 die Kraftstütze 7, die im normalen Fahrbetrieb im wesentlichen senkrecht verläuft (Ruhestellung der Kraftstütze 7), dagegen im aktivierten Zustand die bei 7' angegebene Lage einnimmt, in der sie sich unter Überbrückung des definierten Freiraums bzw. Abstands im wesentlichen horizontal verläuft. Dann stützt sie sich mit ihrem in der Figur linken Ende letztlich an dem Seitenwandbereich 1 und mit ihrem in der Figur rechten Ende (Stützfuß 18) an einem Seitenbestandteil des Sitzes 3 ab.

Zur Durchführung dieser Schwenkbewegung dient die Kolben-Zylinder-Anordnung 9 deren Gaskartusche 10 beispielsweise über einen Precrash-Sensor beim unmittelbaren Bevorstehen eines Seitencrashs gezündet wird und dann den Kolben 11 mit der Kolbenstange 12 in der Figur nach unten bewegt. Die Kraftstütze 7 ist bei 13 an dem freien Ende der Kolbenstange 12 angelenkt, während ihr anderes Ende bei 14 an dem Schwenkhebel 15 angelenkt ist, der die Kolben-Zylinder-Anordnung 9 übergreift und bei 16 oberhalb dieser Anordnung am Seitenwandbereich 1 gelagert ist. Der Schwenkhebel 6 bildet also gleichsam eine Zwangsschwenkführung für die Kraftstütze 7, so daß diese bei Aktivierung der Kolben-Zylinder-Anordnung 9 mit ihrem in der Figur oberen bzw. linken Ende die Rücklaufsperre 17 überstreicht ihre bei 7' gezeichnete Betriebslage einnimmt. Die Rücklaufsperre 17 besteht im wesentlichen aus einem sägezahnähnlichen Profil, das so ausgerichtet ist, daß eine Abwärtsbewegung des beispielsweise mit einem Querbolzen versehenen oberen bzw. linken Endes der Kraftstütze 7 möglich ist, dagegen dieser Bolzen bei Rückwärtsbewegungen von einer steilen Profilflanke der Rücklaufsperre 17 an Aufwärtsbewegungen gehindert wird.

Mit der Erfindung ist demgemäß eine gattungsgemäße Sicherheitseinrichtung geschaffen, die mit minimalem Aufwand an noch dazu sicheren und erprobten Bestandteilen und ohne Beeinträchtigung der Bewegungsfreiheit des betreffenden Fahrzeuginsassen während des normalen Fahrbetriebs gefährlichen Berührungen zwischen einem bei einem Seitencrash eindringenden Seitenwandbereich des Fahrzeugs und dem Fahrzeuginsassen entgegenwirkt.

## Patentansprüche

1. Einem Fahrzeugsitz zugeordnete, durch einen Seitencrash aktivierte Sicherheitseinrichtung zum Schutz eines auf dem Sitz befindlichen Fahrzeuginsassen gegen Verletzungen bei einem eine dem Insassen benachbarte Fahrzeugseite betreffenden Seitencrash, dadurch gekennzeichnet, daß die an einer dem Sitz (3) benachbarten Wand (1) oder an einer dieser gegenüberstehenden Seite (4) des Sitzes (3) untergebrachte, im Normalbetrieb des Fahrzeugs einen Freiraum zwischen Wand (1) und Sitz (3) belassende Einrichtung (6) eine Kraftstütze (7) enthält, die nur nach erfolgter Aktivierung der Sicherheitseinrichtung (6) den Freiraum überbrückt.

2. Sicherheitseinrichtung nach Anspruch 1, dadurch gekennzeichnet, daß zur Aktivierung ein Precrashsenor vorgesehen ist.

3. Sicherheitseinrichtung nach Anspruch 1 oder 2, dadurch gekennzeichnet, daß die Kraftstütze (7) in einer Ruhelage im wesentlichen senkrecht verlaufend mit einem ihrer Enden an einer Kolbenstange (12) einer pyrotechnischen Kolben-Zylinder-Anordnung (9) und mit ihrem anderen, dieser abgekehrten Ende an einem die Kolben-Zylinder-Anordnung (9) übergreifenden Schwenkhebel (15) angelenkt ist und die Länge desselben sowie der Hub der Kolbenstange (12) derart bemessen sind, daß nach der Aktivierung die Kraftstütze (7') im wesentlichen horizontal verläuft.

4. Sicherheitseinrichtung nach Anspruch 3, dadurch gekennzeichnet, daß der Kraftstütze (7) eine Rücklaufsperre (17) zugeordnet ist.

5. Sicherheitseinrichtung nach Anspruch 4, dadurch gekennzeichnet, daß die Rücklaufsperre (17) ein sägezahnähnliches Profil in solcher Anordnung enthält, daß es beim Ausfahren der Kolbenstange (12) von dem einen Ende der Kraftstütze (7) überfahren wird.

6. Sicherheitseinrichtung nach einem der Ansprüche 1 bis 5, dadurch gekennzeichnet, daß an der der Wand (1) abgekehrten Seite des Sitzes (3) eine Einrichtung zur Abstützung des Sitzes (3) an einem Tunnel oder einem benachbarten Sitz vorgesehen ist.
